## Europäisches Patentamt

## European Patent Office

## Office européen des brevets

(11) Veröffentlichungsnummer: **0 032 747**
**B1**

(12) **EUROPÄISCHE PATENTSCHRIFT**

(45) Veröffentlichungstag der Patentschrift:
**21.12.83**

(51) Int. Cl.³: **B 60 C 29/00**, B 60 B 21/00

(21) Anmeldenummer: **81100380.5**

(22) Anmeldetag: **20.01.81**

(54) **Einteilige, gegossene Tiefbettfelge für ein Kraftfahrzeugrad.**

(30) Priorität: **22.01.80 CH 493/80**

(43) Veröffentlichungstag der Anmeldung:
**29.07.81 Patentblatt 81/30**

(45) Bekanntmachung des Hinweises auf die Patenterteilung:
**21.12.83 Patentblatt 83/51**

(84) Benannte Vertragsstaaten:
**AT BE DE FR GB IT NL SE**

(56) Entgegenhaltungen:
**FR - A - 2 100 903**
**FR - A - 2 151 129**
**US - A - 2 798 529**
**US - A - 2 823 724**

(73) Patentinhaber: **GEORG FISCHER AKTIENGESELLSCHAFT, Mühlentalstrasse 105, CH-8201 Schaffhausen (CH)**

(72) Erfinder: **Rohr, Jakob, Ing. HTL, Bachtelstrasse 26, CH-8200 Schaffhausen (CH)**

EP 0 032 747 B1

Einteilige, gegossene Tiefbettfelge für ein Kraftfahrzeugrad

Die Erfindung betrifft eine einteilige, gegossene Tiefbettfelge für ein schlauchloses Kraftfahrzeugrad, wobei die Felge für eine Doppelmontage mit einem seitlichen Stützring zur Befestigung auf einem Schlüsselteil versehen ist.

Aus der DE-OS 2 144 428 ist eine Tiefbettfelge bekannt, bei der die Radschüssel so unsymmetrisch versetzt ist, daß sie mit einer Aussparung bzw. Eindrückung versehen sein muß. Das Ventil ist auf der dem Tiefbett abgewandten Seite der Tiefbett-Felge in der örtlichen Eindrückung angeordnet.

Diese und andere bekannte, gegossene Tiefbettfelgen sind mit einigen Nachteilen behaftet. So sind die Ventillöcher jeweils in die Bodenwand des Tiefbettes eingesetzt. Die Ventile verlaufen somit zwischen dem Tiefbettboden und der Bremstrommel. Insbesondere bei längeren Bremsbetätigungen kann die Lufttemperatur in diesem engen Ringspalt auf einige hundert Grad C ansteigen und dadurch den O-Ring an der, der Bremstrommel zugewandten Seite des Tiefbettes derart erhitzen, daß seine Dichtfunktion beeinträchtigt wird, so daß die Gefahr besteht, daß der Reifen undicht wird. Ein anderer Nachteil besteht darin, daß eine Demontage der Felge, z. B. zum Zwecke eines Reifenwechsels, wegen Verklemmung auf dem Schüsselteil oftmals nur mit äußerster Anstrengung möglich ist, was zu Zeitverlusten und Beschädigungen führen kann.

Es ist Aufgabe der vorliegenden Erfindung, die obengenannten Nachteile zu vermeiden und, ausgehend vom Stand der Technik, eine bezüglich Betriebssicherheit und Wechselprozedeur (Demontierbarkeit) verbesserte Felge vorzuschlagen. Auch sollen die Herstellungskosten gesenkt werden.

Die Aufgabe wird erfindungsgemäß gelöst durch die kennzeichnenden Merkmale des 1. Anspruchs. Vorteilhafte Weiterbildungen gehen aus den sonstigen Ansprüchen hervor.

Durch die vorgeschlagene Ventillochanordnung kann ein einfacheres Ventil Anwendung finden, wodurch die Kosten für die Ventile auf etwa die Hälfte gesenkt werden können. Außerdem wird der Verlauf des Ventils außerhalb des hitzegefährdeten Ringspalts zwischen Tiefbettboden und Bremstrommel verlegt, so daß die Gefahr einer O-Ring-Zerstörung wesentlich herabgesetzt wird, was der Sicherheit im Betrieb zugute kommt. Zudem wird durch die Aussparung eine größere elastische Flexibilität des Stützringrandes erreicht, so daß die Felge bequem und ohne Gewalt, sogar bei längeren Einsatzzeiten, vom Schlüsselteil entfernt und auch wieder montiert werden kann.

Die Erfindung wird nunmehr anhand eines in der Zeichnung dargestellten Ausführungsbeispieles näher erläutert. Es zeigt

Fig. 1 ein Profil einer erfindungsgemäßen Tiefbettfelge;

Fig. 2 den linken Teil des Profils nach Fig. 1 im vergrößerten Maßstab gemäß der Linie I-I der Fig. 3 mit einem eingesetzten Ventil, und

Fig. 3 eine Teilansicht gemäß dem Pfeil A der Fig. 2 unter Weglassung des Ventils.

Die einteilige, gegossene Tiefbettfelge für ein Kraftfahrzeugrad hat in an sich bekannter Weise einen einstückig angeformten Stützring 2, der mittels nicht gezeichneter Klemmplatten mit einem ebenfalls nicht dargestellten Schüsselteil, z. B. einem Radstern, verbunden ist. In einer der Außenseite des Fahrzeuges zugewandten Seitenwand 3 des Tiefbettes 4 befindet sich ein Ventilloch 5, in das ein Ventil 10 von der Reifenseite her eingesetzt ist. Ein O-Ring 11 zwischen dem Kopf 12 des Ventils 10 und der reifenseitigen Fläche der Wand 3 wird durch Anziehen einer Überwurfmutter 16 an der entgegengesetzten Wandseite angedrückt und verhindert ein Entweichen von Luft aus dem schlauchlosen Reifen 17. Notfalls kann auch ein Schlauch unter dem Reifen montiert werden, wobei in diesem Falle das Ventil Teil des Schlauches ist. Das Ventil 10 ragt in eine Aussparung 18 im Stützring 2 hin, derart, daß das Luftzufuhrende 19 des Ventils 10 innerhalb der muldenförmigen, ringförmigen Vertiefung 23 zu liegen kommt. Diese Anordnung ist unbedingt notwendig bei Doppelrädern, damit ein in die Vertiefung 23 eingesetzter Zwischenring 24 den Zugang zum Luftzufuhrende 19 nicht verbaut.

Die Aussparung 18 erstreckt sich bis zur Wand 3, einerseits um genügend Platz für das Ventil 10 zu schaffen, anderseits um eine größtmögliche Flexibilität (elastisches Nachgeben) des Stützringes zu erzeugen, so daß eine Demontage der Felge vom Radstern bequem ohne Beschädigungen und Zeitverlust erfolgen kann.

Die Endbereiche 25, 26 des unterbrochenen Stützrings 2 beidseits der Aussparung 18 und die der Außenseite des Fahrzeuges zugewandte Felgenschulter 30 sind nicht nur über die Wand 3, sondern ebenfalls über je eine einstückig angeformte Rippe 31 bzw. 32 miteinander verbunden, wobei die Rippen schräg zueinander verlaufen und auch einstückig mit der Wand 3 verbunden sind. Durch diese schräge Anordnung wird eine gewisse radiale Flexibilität auch der Endbereiche bei einer ausreichenden Stabilität bzw. Gestaltfestigkeit des Stützringes ermöglicht, und gleichzeitig ist sie für die Übertragung des Kraftflusses vorteilhaft. Als optimal gilt, wenn die Rippen 31, 32 einen Winkel 35 von 40 bis 80 Grad einschließen, vorzugsweise etwa 60 Grad.

Obgleich auch Ausführungen mit zwei oder mehr parallel verlaufenden Rippen pro Endbereich möglich sind, hat es sich gezeigt, daß je eine Rippe pro Endbereich ausreicht, wenn die Dicke 36 etwa der Dicke der Felgenschulter 30 entspricht.

Das Ventilloch 5 bzw. das Ventil 10 ist mittig zwischen den Rippen 31, 32 angeordnet, wobei der Abstand 37 zwischen der Mittellinie des Loches 5 bis zur Rippe zwischen 15 mm und 30 mm liegt, liegt, vorzugsweise soll er 20 mm betragen. Dadurch kann einerseits die Mutter 16, wenn erwünscht, auch von Hand, gedreht werden, andererseits bleibt der Abstand zwischen den Endbereichen im Rahmen, so daß die Stabilität bzw. Rigidität des Stützringes gewährleistet ist.

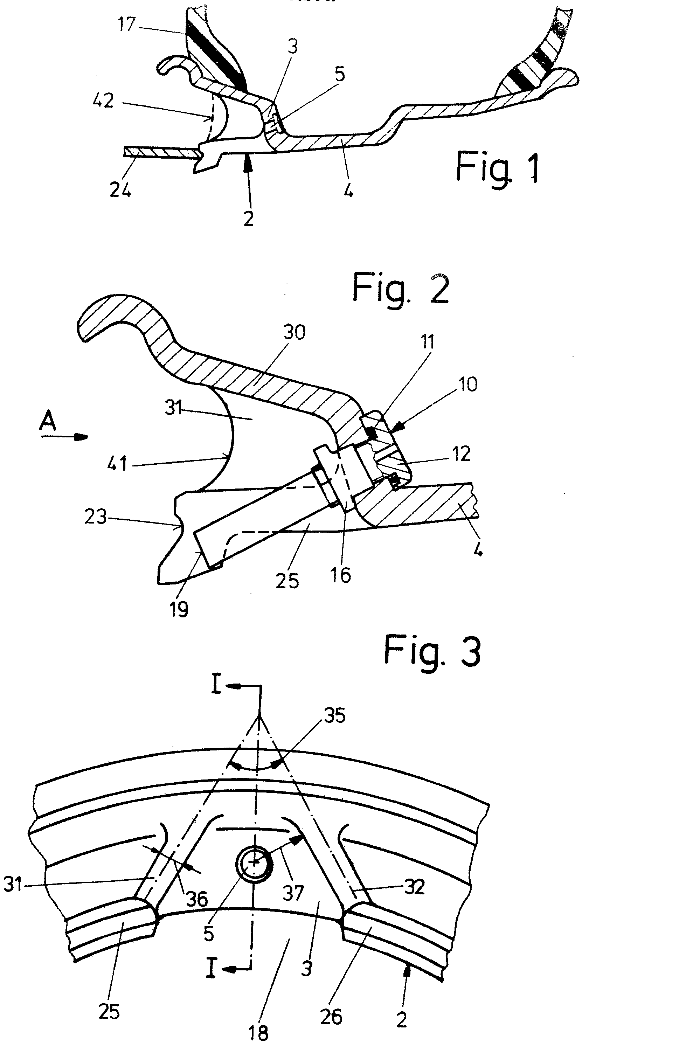

Der freie Rand 41 jeder Rippe hat vorteilhafterweise einen nach innen gebogenen Verlauf, wie es in Fig. 2 dargestellt ist. Ein hauptsächlich gerader Verlauf ist aber auch möglich wie es die Strichellinie 42 in Fig. 1 zeigt.

## Patentansprüche

1. Einteilige, gegossene Tiefbettfelge für ein schlauchloses Kraftfahrzeugrad wobei die Felge für eine Doppelmontage mit einem seitlichen Stützring (2) zur Befestigung auf einem Schlüsselteil versehen ist, und eine Aussparung (18) im Stützring (2) aufweist, dadurch gekennzeichnet, daß die Aussparung (18) sich bis zur Wand (3) des Tiefbettes (4) erstreckt, und daß ein Ventilloch (5) in einer Seitenwand (3) des Tiefbettes (4) so angeordnet ist, daß das in das Ventilloch einzusetzende Ventil (10) in die Aussparung (18) hineinragt.

2. Tiefbettfelge nach Anspruch 1, dadurch gekennzeichnet, daß die Endbereiche (25, 26) des Stützringes (2) beidseits der Aussparung (18) über Rippen (31, 32) mit der gegenüberliegenden Felgenschulter (30) verbunden sind.

3. Tiefbettfelge nach Anspruch 2, dadurch gekennzeichnet, daß die Endbereiche mit je einer Rippe verbunden sind.

4. Tiefbettfelge nach Anspruch 3, dadurch gekennzeichnet, daß die beiden Rippen (31, 32) von den Endbereichen (25, 26) des Stützringes (2) aus, zueinander hin verlaufen.

5. Tiefbettfelge nach Anspruch 3 oder Anspruch 4, dadurch gekennzeichnet, daß das Ventilloch (5) mittig zwischen den Rippen (31, 32) angeordnet ist und daß der Abstand (37) zwischen dem Ventilloch (5) und einer jeden Rippe zwischen 15 und 30 mm beträgt.

6. Tiefbettfelge nach Anspruch 4 oder Anspruch 5, dadurch gekennzeichnet, daß die Rippen einen Winkel von 40 bis 80 Grad einschließen.

7. Tiefbettfelge nach einem der Ansprüche 2 bis 6, dadurch gekennzeichnet, daß der freie Rand (41) jeder Rippe einen nach innen gebogenen Verlauf hat.

8. Tiefbettfelge nach Anspruch 1 bis 7, dadurch gekennzeichnet, daß die Dicke jeder Rippe etwa der Dicke der Felgenschulter (30) entspricht.

## Claims

1. One-piece cast well base rim for a tubeless motor vehicle wheel, wherein the rim for a double mounting is provided with a lateral thrust ring (2) for securing on a dish part, and has a recess (18) in the thrust ring (2), characterised in that the recess (18) extends to the wall (3) of the well base (4), and that a valve aperture (5) is so disposed in a side wall (3) of the well base (4) that the valve (10) to be inserted into the valve aperture projects into the recess (18).

2. Well base rim according to claim 1, characterised in that the end zones (25, 26) of the thrust ring (2) are connected on both sides of the recess (18) by means of ribs (31, 32) to the opposite shoulder of the rim (30).

3. Well base rim according to claim 2, characterised in that the end zones are each connected to a rib.

4. Well base rim according to claim 3, characterised in that the two ribs (31, 32) run out from the end zones (25, 26) of the thrust ring (2) towards one another.

5. Well base rim according to claim 3 or 4, characterised in that the valve aperture (5) is disposed in the middle between the ribs (31, 32), and that the distance (37) between the valve aperture (5) and any one rib is between 15 and 30 mm.

6. Well base rim according to claim 4 or 5, characterised in that the ribs enclose an angle of 40 to 80 degrees.

7. Well base rim according to one of claims 2 to 6, characterised in that the free edge (41) of each rib has a curve that is turned inwards.

8. Well base rim according to claim 1 to 7, characterised in that the thickness of each rib corresponds approximately to the thickness of the shoulder of the rim (30).

## Revendications

1. Jante à base creuse, coulée monobloc, pour une roue de véhicule automobile sans chambre, la jante étant munie, par le montage jumelé, d'une couronne d'appui latérale (2) servant à la fixation sur un voile, et présentant une échancrure (18) dans la couronne d'appui (2), caractérisée en ce que l'échancrure (18) s'étend jusqu'á la paroi (3) de la base creuse (4) et en ce qu'un trou de valve (5) est dispoé dans une paroi latérale (3) de la base creuse (4) de telle manière que la valve (10) à monter dans le trou de valve fasse saillie dans l'échancrure (18).

2. Jante à base creuse selon la revendication 1, caractérisée en ce que, de part et d'autre de l'échancrure (18) les régions terminales (25, 26) de la couronne d'appui (2) sont reliées, à l'épaulement (30) de la jante placé en face par des nervures (31, 32).

3. Jante à base creuse selon la revendication 2, caractérisé en ce que les régions terminales sont réunies chacune par une nervure.

4. Jante à base creuse selon la revendication 3, caractérisée en ce que les deux nervures (31, 32) convergent l'une vers l'autre en partant des régions terminales (25, 26) de la couronne d'appui (2).

5. Jante à base creuse selon la revendication 3 ou la revendication 4, caractérisée en ce que le trou de valve (5) est disposé au milieu entre les nervures (31, 32) et en ce que la distance (37) entre le trou de valve (5) et chaque nervure est entre 15 et 30 mm.

6. Jante à base creuse selon la revendication 4 ou la revendication 5, caractérisée en ce que les nervures forment entre elles un angle de 40 à 80°.

7. Jante à base creuse selon l'une des revendications 2 à 6, caractérisée en ce que le bord libre (41) de chaque nervure présente une forme incurvée vers l'inérieur.

8. Jante à base creuse selon l'une des revendications 1 à 7, caractérisé en ce que l'épaisseur de chaque nervure correspond à peu près à l'épaisseur de l'épaulement (30) de la jante.

0 032 747

Fig. 1

Fig. 2

Fig. 3